# EUROPÄISCHE PATENTSCHRIFT

(11) **EP 3 838 462 B1**
(45) Veröffentlichungstag und Bekanntmachung des Hinweises auf die Patenterteilung: **19.07.2023**
(21) Anmeldenummer: 20211515.0
(22) Anmeldetag: 03.12.2020
(51) Int. Cl.: B23D 77/02, B23D 77/00, B23D 77/04

(54) **MASCHINENREIBWERKZEUG, SCHNEIDEINSATZ UND GRUNDKÖRPER ZUR AUFNAHME VON SCHNEIDEINSÄTZEN**
MACHINE REAMING TOOL, CUTTING INSERT AND BASE BODY FOR RECEIVING CUTTING INSERTS
ALÉSOIR MACHINE, INSERT DE COUPE ET CORPS DE BASE DESTINÉ À LA RÉCEPTION DES INSERTS DE COUPE

(30) Priorität: 20.12.2019 CH 16882019
(43) Veröffentlichungstag der Anmeldung: 23.06.2021
(73) Patentinhaber: URMA AG WERKZEUGFABRIK, 5102 Rupperswil (CH)
(72) Erfinder: ZUMSTEG, Gilbert, 5102 Rupperswil (CH); BERGER, Daniel, 5102 Rupperswil (CH)
(74) Vertreter: Frei Patent Attorneys

(56) Entgegenhaltungen:
- EP-A2- 1 750 881
- DE-A1-102007 007 399
- DE-C- 385 524
- GB-A- 172 796
- US-A- 2 278 988
- US-A- 2 517 970

## Beschreibung

Die Erfindung bezieht sich auf das Gebiet der Reibwerkzeuge für die Bearbeitung von Bohrungen in verschiedenen Materialien, insbesondere Metall, Kunststoffen, Faserverbundwerkstoffen, etc. Die Erfindung bezieht sich auf ein Maschinenreibwerkzeug gemäß dem Oberbegriff des Anspruchs 1, einen Schneideinsatz gemäß dem Oberbegriff des Anspruchs 9 sowie einen Grundkörper gemäß dem Oberbegriff des Anspruchs 13. Ein solches Maschinenreibwerkzeug, ein solcher Schneideinsatz und ein solcher Grundkörper sind aus der US 2 517 970 A bekannt.

Maschinenreibwerkzeuge oder Maschinenreibahlen werden zur Feinbearbeitung von zylindrischen Bohrungen in Metallteilen durch das sogenannte "Reiben" verwendet. Verbessert werden dabei sowohl die Oberflächengüte als auch die Form- und Massgenauigkeit, Rundheit und Zylindrizität. Zunächst wird eine Bohrung erstellt welche wenige Zehntel eines Millimeters (meist 0.1-0.2 mm) kleiner als ein Nennmass ist. Anschliessend wird die Bohrung mithilfe des Reibwerkzeugs auf Nennmass gebracht. Auf diese Weise können kleinere Toleranzen gefertigt werden. Die erzielbare Maßtoleranz liegt im Normalfall bei IT7. In Sonderfällen ist auch IT6 oder gar IT5 möglich.

Einzelne Schneiden eines Reibwerkzeuges weisen jeweils eine Hauptschneide oder Anschnittpartie und eine Nebenschneide oder Führungspartie auf. Die Anschnittpartie leistet die Spanungsarbeit, die Führungspartie dient der Führung des Werkzeugs in der Bohrung. Um in allen Bearbeitungsumständen eine sichere Führung zu gewährleisten, beispielsweise bei einem schrägen Austritt der Bohrung, ist die Führungspartie in axialer Richtung um ein Vielfaches länger als die Anschnittpartie. Die Länge der Führungspartie beträgt somit beispielsweise 10 Millimeter oder mehr, bei einem Durchmesser von beispielsweise des Reibwerkzeugs von ca. 15 Millimetern. Bei einer geraden verzahnten Schneide verläuft die Führungspartie parallel zur Rotationsachse des Werkzeuges. Bei einer schräg verzahnten Schneide verläuft die Führungspartie schräg zur Rotationsachse des Werkzeuges.

Es ist bekannt, Grundkörper mit auswechselbaren Schneidkörpern aus Hartmetall zu bestücken, indem die Schneidkörper in eine Halterung des Grundkörpers eingeklemmt, aufgelötet oder angeschraubt werden, und anschliessend Schneidflächen der Schneidkörper auf ein gewünschtes Durchmesser-Mass zu schleifen. Dies ist jedoch aufwendig, da in jedem Fall, ausgehend von einem bestimmten gewünschten Mass, dieser Vorgang durchgeführt werden muss. Werden die Schneidkörper vom Grundkörper entfernt und neu angebracht, müssen sie in der Regel wieder genau an der gleichen Stelle eingesetzt werden, oder neu geschliffen werden.

US 2 517 970 zeigt ein Reibwerkzeug mit auswechselbaren Schneiden. Die Schneiden sind jeweils mittels einer radial verlaufenden Gleitführung mit schrägen Nuten in einen Schaft eingesetzt. Das Werkzeug ist nicht dazu vorgesehen, auf verschiedene Durchmesser eingestellt zu werden.

DE 10 2007 007399 A1 zeigt eine Maschinenreibahle mit einem Werkzeughalter und einem Schneidenblock, welcher im Werkzeughalter quer zu dessen Längsachse beweglich geführt ist. Damit können die Schneiden, zusammen mit dem Schneidenblock, eine Pendelbewegung um die Längsachse ausführen, um einen Versatz zwischen Bohrung und Werkzeug auszugleichen.

GB 172 796 zeigt ein Reibwerkzeug mit radial verstellbaren Schneiden. Jede Schneide ist in einem radial verlaufenden Schlitz geführt. Die Schneiden werden gemeinsam mittels eines Konus radial verschoben und auf einen Durchmesser eingestellt. Die Präzision der Führung in den Schlitzen ist konstruktionsbedingt begrenzt.

Eine mögliche Aufgabe der Erfindung ist, ein Maschinenreibwerkzeug, einen Schneideinsatz und einen Grundkörper zur Aufnahme von Schneideinsätzen der eingangs genannten Art zu schaffen, welche die oben genannten Nachteile behebt.

Eine weitere mögliche Aufgabe ist, ein Maschinenreibwerkzeug, einen Schneideinsatz und einen Grundkörper zur Aufnahme von Schneideinsätzen zu schaffen, welche eine präzise und verstellbare Halterung der Schneideinsätze im Grundkörper ermöglichen. Eine weitere mögliche Aufgabe ist, ein Maschinenreibwerkzeug, einen Schneideinsatz und einen Grundkörper zur Aufnahme von Schneideinsätzen zu schaffen, welche eine rasche Bereitstellung eines Reibwerkzeugs für ein vorgegebenes Mass erlauben.

Mindestens eine diese Aufgaben lösen ein Maschinenreibwerkzeug gemäß dem Anspruch 1, und/oder einen Schneideinsatz gemäß dem Anspruch 9, und/oder einen Grundkörper gemäß dem Anspruch 13. Bevorzugte Ausführungsformen sind durch die Merkmale der abhängigen Ansprüche definiert.

Das **Maschinenreibwerkzeug** weist einen Grundkörper mit einer Mehrzahl von Schneidenaufnahmen mit darin eingesetzten Schneideinsätzen auf. Dabei sind die Schneideinsätze in Schneidenaufnahmen eingesetzt, welche jeweils eine Linearführung (oder Geradführung) der Schneideinsätze in eine Richtung orthogonal zu einer Rotationsachse des Maschinenreibwerkzeugs bilden.

In Ausführungsformen sind die Schneideinsätze jeweils in einer wählbaren Position entlang der jeweiligen Linearführung positionierbar und fixierbar. Damit ist die radiale Position der Schneideinsätze einstellbar und/oder verstellbar.

Dadurch wird es möglich, die Schneideinsätze in einer definierten Position entlang der Linearführung zu positionieren und zu fixieren, ohne dass die Schneideinsätze nachgeschliffen werden müssen.

In Ausführungsformen schneidet eine mittige Längsachse der Linearführung, insbesondere eine Achse, entlang welcher sich die Schneide beim Verschieben des Schneideinsatzes verschiebt, die Rotationsachse des Maschinenreibwerkzeugs. In anderen Ausführungsformen ist dies nicht der Fall.

Die Linearführung ist eine prismatische Gleitführung. Erfindungsgemäß ist sie eine Schwalbenschwanzführung, wobei der Schneideinsatz einen Schwalbenschwanzabschnitt mit einer ersten Führungsfläche und einer zweiten Führungsfläche aufweist, welche mit einer ersten Aufnahmefläche und einer zweiten Aufnahmefläche des Grundkörpers zusammenwirkend die Schwalbenschwanzführung definieren.

Dadurch wird eine präzise Führung der Schneideinsätze im Grundkörper möglich.

In Ausführungsformen ist die Schwalbenschwanzführung asymmetrisch ausgebildet, insbesondere indem ein Winkel zwischen der ersten Führungsfläche bezüglich einer Referenzebene, welche orthogonal zur Rotationsachse des Maschinenreibwerkzeugs verläuft, sich von dem Winkel zwischen der zweiten Führungsfläche und der Referenzebene unterscheidet, insbesondere um mindestens 3° oder mindestens 5°.

Dadurch wird es möglich, eine Asymmetrie von Kräften, die sich beim Einspannen des Schneideinsatzes an nur einer Seite des Schneideinsatzes ergeben, mindestens teilweise auszugleichen. Dadurch wiederum wird die Präzision der Auflage des Schneideinsatzes auf dem Grundkörper erhöht.

In Ausführungsformen beträgt der Winkel zwischen der ersten Führungsfläche bezüglich der Referenzebene 65°, und beträgt der Winkel zwischen der zweiten Führungsfläche und der Referenzebene 70°.

Es ist der Fall, dass
- das Maschinenreibwerkzeug einen Klemmkörper aufweist, welcher mit der zweiten Aufnahmefläche zusammenwirkt und dabei eine Kraft ausübt, welche die erste Führungsfläche gegen die erste Aufnahmefläche presst,
- und insbesondere diese Kraft auch eine erste und eine zweite Referenzfläche des Schneideinsatzes gegen eine Referenzfläche des Grundkörpers presst,
- wobei insbesondere diese Referenzflächen orthogonal zur Rotationsachse des Maschinenreibwerkzeugs liegen.

Dadurch wird es möglich, die beiden einander bezüglich des Schwalbenschwanzabschnitts gegenüberliegenden Referenzflächen des Schneideinsatzes mit einem einzigen Klemmelement gegen die korrespondierende Referenzfläche des Grundkörpers zu pressen.

In Ausführungsformen ist es der Fall, dass der Klemmkörper und die zweite Aufnahmefläche, in Drehrichtung bei Verwendung des Maschinenreibwerkzeugs gesehen, bezüglich des Schneideinsatzes vorlaufen.

Dadurch wird es möglich, dass Bearbeitungskräfte, welche entgegen der Drehrichtung auf den Schneideinsatz wirken, hauptsächlich durch die erste Führungsfläche auf die erste Aufnahmefläche übertragen werden. Dadurch steht eine grössere Planfläche zur Kraftübertragung zur Verfügung als bei der zweiten Aufnahmefläche, welche durch einen Abschnitt unterbrochen ist, in welchem sich der Klemmkörper befindet.

In Ausführungsformen weist das Maschinenreibwerkzeug eine Spannmutter auf, welche mit einem Gewindeabschnitt des Klemmkörpers zusammenwirkend die Kraft ausübt, welche die erste Aufnahmefläche gegen die erste Führungsfläche presst, wobei die Spannmutter einen Konusabschnitt aufweist, und mit diesem Konusabschnitt in einem konischen Sitz des Grundkörpers angeordnet ist.

Dadurch wird es möglich, die mechanische Festigkeit des Grundkörpers im Bereich der Schneidenaufnahme zu gewährleisten, ohne dass die Dicke des Grundkörpers in axialer Richtung vergrössert werden muss.

In anderen Ausführungsformen weist die Spannmutter eine gerade Auflagefläche auf einem planen Sitz im Grundkörper auf.

In Ausführungsformen weist eine Schneidenaufnahme jeweils eine Anschlageinheit auf, welche eine einstellbare Begrenzung der Bewegung des in die Schneidenaufnahme eingesetzten Schneideinsatzes in Richtung der Linearführung bewirkt.

In Ausführungsformen weist die Anschlageinheit eine in Richtung der Linearführung verstellbare Stellschraube auf.

In Ausführungsformen ermöglicht die Stellschraube ein Einstellen der Lage des Schneideinsatzes in einem Bereich von bis zu zehn Millimetern, insbesondere bis zu sechs Millimetern.

Dadurch wird es möglich, die radiale Position des jeweiligen Schneideinsatzes einzustellen und/oder zu verstellen.

In Ausführungsformen weist der Grundkörper einen Aussendurchmesser zwischen 120 und 300 Millimetern auf.

In Ausführungsformen weist das Maschinenreibwerkzeug jeweils sechs bis zwanzig, insbesondere zwölf bis achtzehn entlang des Umfangs des Grundkörpers verteilte Schneideinsätze auf.

Dadurch wird es möglich, einen weiten Bereich von Durchmessern mit einem einzigen Satz von Schneideinsätzen abzudecken. Die Schneideinsätze können präzise gefertigt und geschliffen werden. Für die Anwendung in mit einem bestimmten Schneidmass können die Schneideinsätze in einen Grundkörper mit entsprechendem Durchmesser eingesetzt werden und das Schneidmass eingestellt werden.

Der **Schneideinsatz** ist zur Verwendung in einen Maschinenreibwerkzeug vorgesehen, und weist eine Schneide zum Reiben eines Werkstücks auf, sowie einen Schwalbenschwanzabschnitt zur Linearführung des Schneideinsatzes mittels einer Schwalbenschwanzführung.

Die Schneide weist typischerweise eine Anschnittpartie und eine Führungspartie auf. Die Anschnittpartie dient zum spanabhebenden Bearbeiten eines Werkstücks, die Führungspartie zur Führung des Werkzeugs.

Der Schwalbenschwanzabschnitt ist asymmetrisch ausgebildet, indem
- sich der Schneideinsatz in eine Führungsrichtung erstreckt, und zum Einschieben entlang der Führungsrichtung in eine Schneidenaufnahme vorgesehen ist,
- der Schwalbenschwanzabschnitt zwei Referenzflächen aufweist, welche an gegenüberliegenden Seiten des Schwalbenschwanzabschnitts (und damit auch des Schneideinsatzes) angeordnet sind und in einer gemeinsamen Referenzebene liegen,
- der Schwalbenschwanzabschnitt eine erste Führungsfläche und eine zweite Führungsfläche aufweist,
- die Referenzflächen, die erste Führungsfläche und die zweite Führungsfläche parallel zu Führungsrichtung verlaufen,
- die erste Führungsfläche und eine erste der Referenzflächen, im Bereich ausserhalb des Schneideinsatzes, einen ersten Führungswinkel bilden,
- die zweite Führungsfläche und eine zweite der Referenzflächen, im Bereich ausserhalb des Schneideinsatzes, einen zweiten Führungswinkel bilden,
- wobei der erste und der zweite Führungswinkel spitze Winkel sind und sich unterscheiden, insbesondere um mindestens 3° oder mindestens 5°.

Indem die Referenzflächen, die erste Führungsfläche und die zweite Führungsfläche parallel zu Führungsrichtung verlaufen, bilden sie eine Führung des Schneideinsatzes in Führungsrichtung. Anders gesagt bilden die Referenzflächen, die erste Führungsfläche und die zweite Führungsfläche jeweils eine Begrenzung der Bewegung des Schneideinsatzes in eine jeweilige Richtung orthogonal zur Führungsrichtung. Zusammen erlauben diese Flächen, wenn der Schneideinsatz in der Schneidenaufnahme eingesetzt ist - abgesehen von einem kleinen Spiel, welches für einen Schiebesitz erforderlich ist - keine Bewegung des Schneideinsatzes in Richtungen orthogonal zur Führungsrichtung. Sie beschränken somit dessen Bewegung auf eine Linearbewegung entlang der Führungsrichtung.

In Ausführungsformen ist, bezüglich einer Schneidrichtung (oder Arbeitsrichtung) der Schneide, der vorauslaufende der beiden Führungswinkel der grössere.

In Ausführungsformen beträgt der der erste spitze Winkel 65° und beträgt der zweite spitze Winkel 70°.

Die Schneide - mit Anschnitt- und Führungspartie - erstreckt sich in eine Schneidenrichtung, und die Referenzflächen bilden einen Anschlag des Schneideinsatzes in eine Richtung, die im wesentlichen parallel zur Schneidenrichtung verläuft.

Der Schneideinsatz ist zur Bewegung in eine Bewegungsrichtung vorgesehen. Bei Montage des Schneideinsatzes in einem entsprechenden Ringkörper verläuft die Bewegungsrichtung in einer Ebene normal zur Drehachse des Ringkörpers. Die Schneidenrichtung ist normal zur Bewegungsrichtung, oder schräg zur Normalen zur Bewegungsrichtung, mit einem Winkel zur Normalen von beispielsweise weniger als ±30°, insbesondere zwischen 5° und 25° in beide Richtungen.

In Ausführungsformen beträgt die Länge des Schneideinsatzes zwischen 12 und 50 mm, und die Länge des Schneidenaufnahme zwischen 8 und 49 mm.

In Ausführungsformen beträgt die Länge des Schneideinsatzes zwischen 15 und 40 mm, und die Länge des Schneidenaufnahme zwischen 10 und 39 mm.

In Ausführungsformen beträgt die Länge des Schneideinsatzes zwischen 20 und 30 mm, und die Länge des Schneidenaufnahme zwischen 15 und 29 mm

In Ausführungsformen beträgt die Höhe des Schneideinsatzes - d.h. ihre Ausdehnung in die Richtung normal zur Bewegungsrichtung - zwischen 2 und 30 mm, insbesondere zwischen 4 und 20 mm, insbesondere zwischen 6 und 15 mm.

Der **Grundkörper** dient zur Verwendung in einem Maschinenreibwerkzeug. Er weist Schneidenaufnahmen auf, welche jeweils Linearführungen zur Aufnahme von Schneideinsätzen in eine Richtung orthogonal zu einer Rotationsachse des Maschinenreibwerkzeugs bilden.

In Ausführungsformen weist der Grundkörper eine Kühlmittelzuführung auf, in welcher das Kühlmittel durch einen Düsenkörper geleitet wird, wobei der Düsenkörper ein rotationssymmetrisches Teil bezüglich einer Rotationsachse ist, mit einem in Umfangsrichtung um den Düsenkörper verlaufenden Einschnitt.

Ein solcher Grundkörper weist mehrere, jeweils einer Schneidenaufnahme zugeordnete Kühlmittelzuführungen auf, wobei eine Kühlmittelzuführung jeweils durch den Grundkörper zu einer Düsenaufnahme führt, von der Düsenaufnahme aus ein Sprühkanal in Richtung der zugeordneten Schneidenaufnahme führt, und in die Düsenaufnahme ein Düsenkörper eingesetzt ist, der Düsenkörper einen in Umfangsrichtung um den Düsenkörper verlaufenden Einschnitt aufweist, und eine umlaufende Flanke des Einschnitts eine Strahlrichtung eines durch die Kühlmittelzuführung zugeführten Kühlmittelstrahls definiert.

Dabei weist eine äussere Flanke des Einschnitts, in einer Schnittansicht entlang einer Ebene, welche die Rotationsachse enthält, einen Winkel oder Flankenwinkel bezüglich der Rotationsachse auf, welche eine Strahlrichtung des Kühlmittels definiert. Durch die Flanke des Einschnitts kann der Winkel des Kühlmittelstrahls bezüglich der Rotationsachse des Düsenkörpers definiert werden, und somit auch der Winkel des Kühlmittelstrahls bezüglich einer Tangentenfläche am Umfang des Grundkörpers. Wenn der Schneiddurchmesser durch Verstellen der Schneideinsätze verändert wird, können die Kühlmittelstrahlen durch Auswechseln der Düsenkörper angepasst werden. Die Düsenkörper können, wegen ihrer rotationssymmetrischen Form, in einfacher Weise und kostengünstig als Drehteile hergestellt werden.

In Ausführungsformen liegt ein Grundkörper zusammen mit mehreren Sätzen von Düsenkörpern vor, wobei die Sätze von Düsenkörpern unterschiedliche Flankenwinkel aufweisen. D.h. alle Düsenkörper jeweils eines Satzes weisen den gleichen Flankenwinkel auf.

Ein **Verfahren** zum Bereitstellen eines Maschinenreibwerkzeugs mit einem vorgegebenen Schneidmass weist die Schritte auf:
- Schleifen eines Satzes von Schneideinsätzen auf einen Referenzdurchmesser, beispielsweise 140 mm;
- nach Massgabe des vorgegebenen Schneidmasses, wobei das Schneidmass vom Referenzdurchmesser abweicht, Auswahl eines Grundkörpers aus einer Reihe von Grundkörpern mit unterschiedlichen Durchmessern;
- Einsetzen der geschliffenen Schneideinsätze in den Grundkörper und Einstellen der Position der Schneideinsätze in den jeweiligen Schneidenaufnahmen nach Massgabe des Schneidmass, insbesondere mittels einer Anschlageinheit der jeweiligen Schneidenaufnahme.

Das Schneidmass entspricht dem Durchmesser, auf den die Bohrung durch Bearbeitung mit dem Maschinenreibwerkzeug gebracht wird. Damit ist es möglich, einerseits Sätze von Schneideinsätzen in grossen Stückzahlen und mit hoher Genauigkeit zu fertigen, und andererseits einen Satz mit geringem Aufwand an ein gewünschtes Schneidmass anzupassen.

Weitere bevorzugte Ausführungsformen gehen aus den abhängigen Patentansprüchen hervor.

Im Folgenden wird der Erfindungsgegenstand anhand bevorzugter Ausführungsbeispiele, welche in den beiliegenden Zeichnungen dargestellt ist, näher erläutert. Es zeigen jeweils schematisch:
- Figur 1 - 3: einen Maschinenreibwerkzeug in verschiedenen Ansichten;
- Figur 4 - 5: einen Schneideinsatz;
- Figur 6: einen Schnitt durch einen Schneideinsatz im Ringkörper;
- Figur 7: einen Klemmkörper;
- Figur 8 - 9: eine Spannmutter;
- Figur 10: einen Schnitt durch eine Aufnahme für einen Schneideinsatz;
- Figur 11: eine entsprechende Ansicht;
- Figur 12 - 13: einen Düsenkörper; und
- Figur 14 - 19: eine Variante des Düsenkörpers.

Grundsätzlich sind in den Figuren gleiche Teile oder gleich wirkende Teile mit gleichen Bezugszeichen versehen.

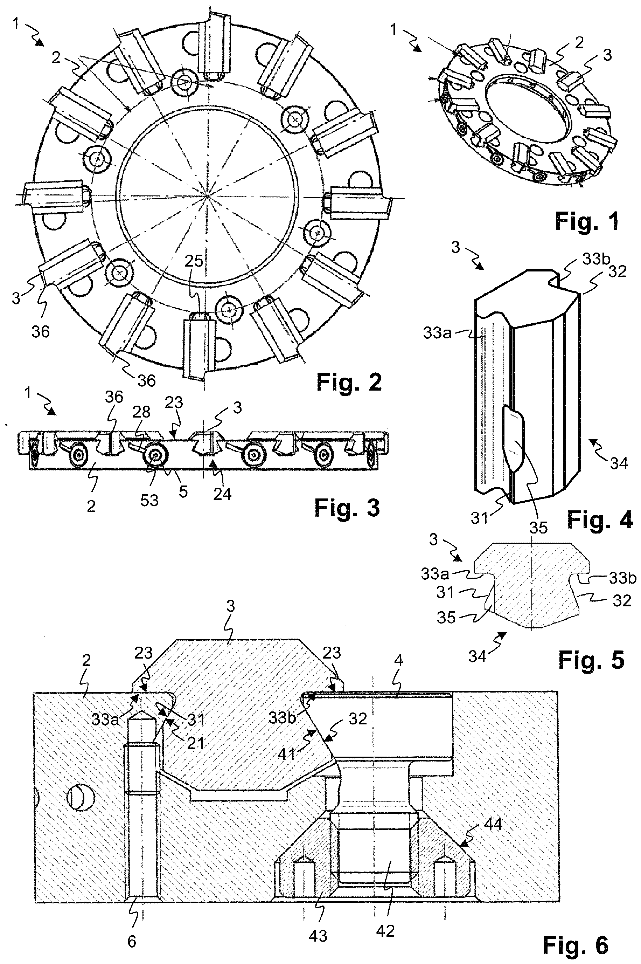

**Figuren 1 - 3** zeigen einen Maschinenreibwerkzeug 1 in verschiedenen Ansichten. Das Maschinenreibwerkzeug 1 weist einen ringförmigen Grundkörper 2 auf, in welchen, um den äusseren Umfang verteilt, Schneideinsätze 3 eingesetzt sind. Typischerweise ist diese Verteilung nicht ganz gleichmässig, um Vibrationen des Werkzeugs zu vermeiden. Die Schneideinsätze 3 sind jeweils in Schneidenaufnahmen 24 eingesetzt und bilden mit diesen eine Linearführung oder Geradführung zur linearen Verschiebung der Schneideinsätze 3 bezüglich der Schneidenaufnahmen 24. Die Führung ist insbesondere eine Schwalbenschwanzführung, die auch als geschlossene prismatische Gleitführung bezeichnet werden kann.

Die Schneideinsätze 3 weisen jeweils eine Schneide 36 auf, mit einer vergleichsweise kurzen Anschnittpartie und einer längeren Führungspartie.

Der Grundkörper 2 ist rotationssymmetrisch bezüglich einer Rotationsachse, und zur Montage an einer Werkzeugmaschine zum Drehen um diese Rotationsachse vorgesehen. Die Schneidenaufnahmen 24 und Schneideinsätze 3 sind so orientiert, dass beim Verschieben der Schneideinsätze 3 in der Führung die Schneiden 36 sich in radialer Richtung bezüglich des Maschinenreibwerkzeugs 1 verschieben, also entlang einer Linie, welche durch die Rotationsachse des Maschinenreibwerkzeugs 1 führt.

Eine axiale Fläche des Grundkörpers 2 dient als Referenzfläche 23 für die Position der Schneideinsätze 3 in axialer Richtung. Dazu kann die Referenzfläche 23 gemäss der erforderlichen Präzision plan geschliffen werden.

Jedem Schneideinsatz 3 ist eine Stellschraube 25 zugeordnet, welche die Position des Schneideinsatzes 3 in radialer Richtung bezüglich des Grundkörpers 2, respektive in Längsrichtung bezüglich des Schneideinsatzes 3, nach innen begrenzt. Die Stellschraube 25 verläuft in radialer Richtung und kann von der Innenseite des Grundkörpers 2 her, durch eine Öffnung in dessen zylindrischer Innenfläche, verstellt werden.

Jedem Schneideinsatz 3 ist eine Kühlmittelzuführung zugeordnet, welche durch einen Düsenkörper 5 und einen Sprühkanal 28 Kühlmittel zur jeweiligen Schneide 36 führt.

**Figuren 4 - 5** zeigen einen Schneideinsatz 3, mit für die Führung relevanten Teilen. Die Schneide 36 ist der Einfachheit halber nicht dargestellt. Der Schneideinsatz 3 weist einen Schwalbenschwanzabschnitt 34 auf, mit den für eine Schwalbenschwanzführung als prismatische Gleitführung relevanten Flächen. Dies sind eine erste Führungsfläche 31, welche in eine erste Referenzfläche 33a übergeht, und eine zweite Führungsfläche 32, welche in eine zweite Referenzfläche 33b übergeht. Alle diese Flächen sind plan und verlaufen jeweils parallel zu einer Längsachse des Schneideinsatzes 3. Die Längsachse ist parallel zu oder koinzident mit einer Führungsrichtung. Zwischen den

Führungsflächen und der jeweiligen Referenzfläche liegt - ausserhalb des Schneideinsatzes gemessen - ein spitzer Winkel, im Folgenden auch als Führungswinkel bezeichnet. An einer Seite des Schwalbenschwanzabschnitts 34 ist eine Ausnehmung 35 angeordnet.

**Figur 6** zeigt einen Schnitt durch einen Schneideinsatz 3 im Ringkörper 2. Es gelten im montierten Zustand eines Schneideinsatzes 3 im Grundkörper 2 die folgenden geometrischen Beziehungen respektive Definitionen:
- Die Referenzfläche 23 des Grundkörpers 2 und die Referenzflächen 33a, 33b des Schneideinsatzes 3 liegen aneinander an und liegen in einer gemeinsamen **Referenzebene.**
- Die erste Aufnahmefläche 21 und die erste Führungsfläche 31 liegen aneinander an und liegen in einer **ersten Führungsebene.** Der Winkel zwischen der ersten Führungsebene und der Referenzebene wird im Folgenden **erster Führungswinkel** genannt.
- Die zweite Aufnahmefläche 22 und die zweite Führungsfläche 32 liegen aneinander an und liegen in einer **zweiten Führungsebene.** Der Winkel zwischen der zweiten Führungsebene und der Referenzebene wird im Folgenden **zweiter Führungswinkel** genannt.

Die Referenzebene liegt normal zur Rotationsachse. Die erste und zweite Führungsebene liegen jeweils in einem Winkel (Führungswinkel) zur Referenzebene. In Ausführungsformen beträgt dieser Winkel zwischen 45° und 85°, insbesondere zwischen 50° und 80°, insbesondere zwischen 55° und 75°.

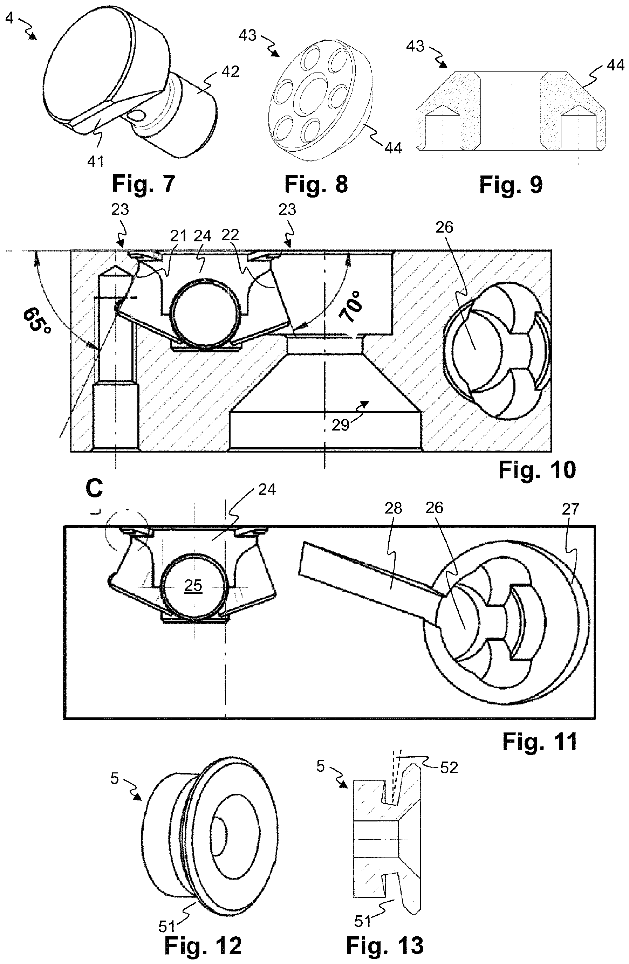

Zusätzlich zum Schneideinsatz 3 liegt ein Klemmkörper 4 vor, siehe auch **Figur 7****,** mit einem Klemmabschnitt 41, welche gegen die zweite Führungsfläche 32 gepresst ist. Die entsprechende Kraft wird durch eine Spannmutter 43 aufgebracht, welche mit einem Gewindeabschnitt 42 des Klemmkörpers 4 verschraubt ist. Die Spannmutter 43, siehe auch **Figur 8** und **9****,** weist einen Konusabschnitt 44 auf, der in einer konischen Aufnahme oder einem konischen Sitz 29 des Grundkörpers 2 angeordnet ist. Die konische Form der Spannmutter 43 erlaubt einerseits, den Gewindeabschnitt zwischen Spannmutter 43 und Klemmkörper 4 ausreichend lang für die erforderliche Spannkraft zu gestalten, und andererseits, den Grundkörper 2 im Bereich der Schneidenaufnahme 24 nicht zu sehr schwächen. Der Konuswinkel im Konusabschnitt 44 beträgt beispielsweise 45°.

Die Spannmutter 43 zieht den Klemmkörper 4 in axialer Richtung des Grundkörpers 2, und da die zweite Führungsfläche 32 und der Klemmabschnitt 41 plan sind und aneinander anliegen, in einer Ebene liegen, welche schräg zur axialen Richtung verläuft, entsprechend dem zweiten Führungswinkel, übt der Klemmabschnitt 41 eine Klemmkraft auf den Schneideinsatz 3 auf, welche sowohl eine axiale Komponente als auch eine Komponente in Umfangsrichtung bezüglich des Grundkörpers 2 respektive orthogonal zur Führungsrichtung des Schneideinsatzes 3 aufweist.

Diese Klemmkraft führt dazu, dass die erste Referenzfläche 33a und die zweite Referenzfläche 33b des Schneideinsatzes 3 gegen die Referenzfläche 23 des Grundkörpers 2 gepresst werden, und dass die erste Führungsfläche 31 gegen die erste Aufnahmefläche 21 gepresst wird. Damit ist die Position des Schneideinsatzes 3 im Grundkörper 2 bezüglich fünf Freiheitsgraden definiert. Der sechste Freiheitsgrad entspricht der Verschiebbarkeit in der Führungsrichtung.

**Figur 6** zeigt ferner einen Gewindestift 6, welcher in den Grundkörper 2 eingesetzt, insbesondere eingeschraubt ist, und im Bereich der Ausnehmung 35 den Querschnitt des Schneideinsatzes 3 überlappt. Die Ausnehmung 35 ist länglich, so dass der Schneideinsatz 3 in Führungsrichtung verschoben werden kann, ohne dass der Gewindestift 6 tangiert wird. Der Gewindestift 6 dient als Verliersicherung oder Sicherung vor Wegschleudern, für den Fall dass die Klemmkraft nachlassen sollte.

**Figur 10** zeigt einen Schnitt durch eine Schneidenaufnahme 24 für einen Schneideinsatz, und **Figur 11** zeigt eine entsprechende Ansicht auf einen Ausschnitt des Grundkörpers 2 im Bereich dieser Schneidenaufnahme 24. Es ist nur der Grundkörper 2 dargestellt. Die Neigung der ersten Aufnahmefläche 21 und der zweite Aufnahmefläche 22 ist hier unterschiedlich gross. Insbesondere beträgt der erste Führungswinkel 65° und der zweite Führungswinkel 70°. Indem der zweite Führungswinkel grösser als der erste ist, können die Presskraft an der zweiten Referenzfläche 33b und die Presskraft an der ersten Referenzfläche 33a einander angenähert werden. Wenn die Winkel gleich gross sind, ist die Presskraft an der ersten Referenzfläche 33a kleiner, typischerweise wegen der Geometrie der Führung und wegen Reibung zwischen dem Klemmabschnitt 41 des Klemmkörpers 4 und der zweite Führungsfläche 32. Indem der zweite Führungswinkel, also der Winkel, an welchem der Klemmkörper 4 angreift, bezüglich des ersten Führungswinkels vergrössert wird, wird die Presskraft zwischen der ersten Referenzfläche 33a und der Referenzfläche 23 des Grundkörpers 2 vergrössert.

Indem die beiden Presskräfte an den beiden Referenzflächen 33 aneinander angeglichen werden, wird die Präzision der Auflage des Schneideinsatzes 3 auf der Referenzfläche 23 erhöht.

**Figuren 12** - **13** zeigen einen Düsenkörper 5. Dieser ist in eine Düsenaufnahme 27 des Grundkörpers 2 (siehe **Figur 11**) eingesetzt. Er kann mit einer Schraube 53 im Grundkörper befestigt sein (siehe **Figur 3**)**.** Der Düsenkörper 5 weist einen umlaufenden Einschnitt 51 auf. Die Düsenaufnahme 27 weist eine Ausnehmung auf, durch welche Kühlmittel von einer Kühlmittelzuführung 26 vom Inneren des Grundkörpers 2 her in den Einschnitt 51 fliesst. Das Kühlmittel kann den Einschnitt 51 nur im Bereich eines Sprühkanals 28 verlassen. Der Sprühkanal 28 ist ein Einschnitt oder eine Ausnehmung im Grundkörper 2, welcher eine Öffnung des Hohlraums, der durch den Einschnitt 51 gebildet ist, darstellt. Diese Öffnung ist auf die Schneide 36 ausgerichtet. Bezogen auf die Symmetrieachse des Düsenkörpers 5 definiert der Sprühkanal 28 die Richtung des Kühlmittelstrahles entlang des Umfangs des Düsenkörpers 5. Ein Flankenwinkel 52 einer Flanke des Einschnitts 51 definiert den Winkel zwischen dem Kühlmittelstrahl und der Symmetrieachse.

Wird die Lage der Schneide 36 durch Verschieben des Schneideinsatzes 3 verstellt, so kann der Kühlmittelstrahl auf die neue Lage eingestellt werden, indem der Düsenkörper 5 durch einen Düsenkörper 5 mit einem anderen Flankenwinkel 52 ersetzt wird. Da die Düsenkörper 5 als rotationssymmetrische Teile ausgebildet sind, sind sie einfach und kostengünstig zu fertigen. Damit ist eine kostengünstige Anpassung der Kühlmittelzuführung an die verstellbare Position der Schneideinsätze 3 möglich.

Der Flankenwinkel 52, als Abweichung der Ausrichtung der Flanke von einer Tangentenebene an den Umfang des Grundkörpers 2 an der Stelle des Düsenkörpers 5, beträgt beispielsweise zwischen 1° und 45°, insbesondere zwischen 5° und 35°, insbesondere zwischen 10° und 30°

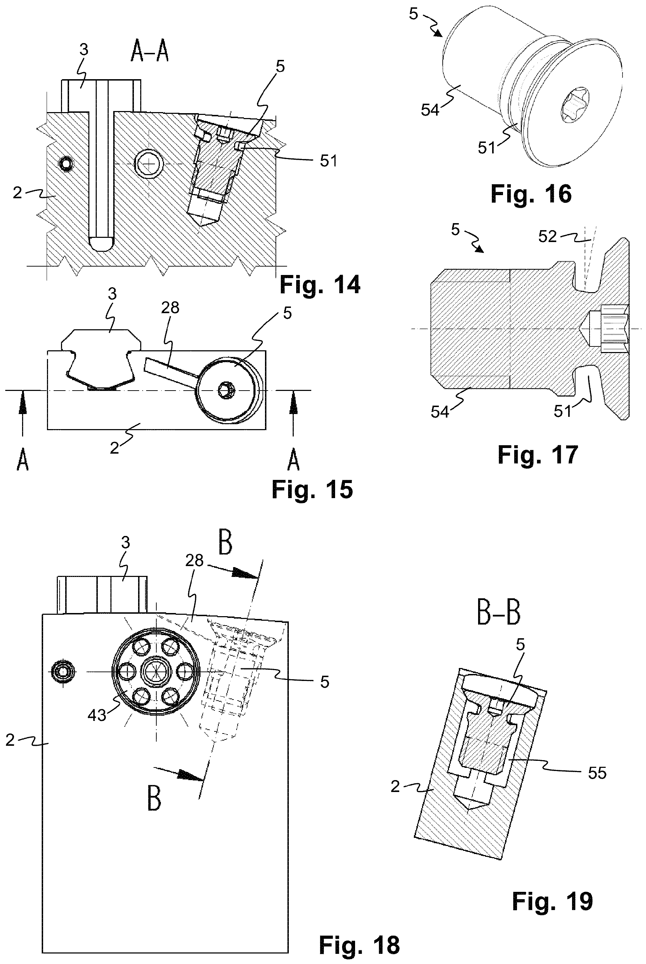

Figur 14-19 zeigen eine Variante des Düsenkörpers 5 in Einzelansichten sowie im montierten Zustand in verschiedenen Ansichten und Schnitten. Im Gegensatz zum Düsenkörper 5 der vorangehenden Figuren, welcher mit einer Schraube 53 befestig ist, weist dieser Düsenkörper 5 selber einen Gewindeabschnitt 54 auf, mit welchem er in ein korrespondierendes Innengewinde des Grundkörpers 2 geschraubt ist. Dieses Innengewinde ist durch mindestens eine Ausnehmung 55 unterbrochen, welche parallel zur Achse des Gewindes verläuft und einen Kanal für die Kühlmittelzuführung zum Einschnitt 51 bildet. Alternativ (nicht dargestellt) oder zusätzlich kann der Gewindeabschnitt 54 Ausnehmungen in axialer Richtung zur Kühlmittelzuführung aufweisen.

## Patentansprüche

1. **Maschinenreibwerkzeug** (1), aufweisend einen Grundkörper (2) mit einer Mehrzahl von Schneidenaufnahmen (24) mit darin eingesetzten Schneideinsätzen (3);
wobei die Schneideinsätze (3) in Schneidenaufnahmen (24) eingesetzt sind, welche jeweils eine prismatische Gleitführung als Linearführung der Schneideinsätze (3) in eine Richtung orthogonal zu einer Rotationsachse des Maschinenreibwerkzeugs (1) bilden,
**dadurch gekennzeichnet, dass** die Linearführung eine prismatische Gleitführung in Form einer Schwalbenschwanzführung ist, wobei der Schneideinsatz (3) einen Schwalbenschwanzabschnitt (34) mit einer ersten Führungsfläche (31) und einer zweiten Führungsfläche (32) aufweist, welche mit einer ersten Aufnahmefläche (21) und einer zweiten Aufhahmefläche (22) des Grundkörpers (2) zusammenwirkend die Schwalbenschwanzführung definieren, und
wobei das Maschinenreibwerkzeug (1) einen Klemmkörper (4) aufweist, welcher mit der zweiten Aufhahmefläche (22) zusammenwirkt und dabei eine Kraft ausübt, welche die erste Führungsfläche (31) gegen die erste Aufnahmefläche (21) presst.

2. Maschinenreibwerkzeug (1) gemäss Anspruch 1, wobei die Schwalbenschwanzführung asymmetrisch ausgebildet ist,
insbesondere indem ein Winkel zwischen der ersten Führungsfläche (31) bezüglich einer Referenzebene, welche orthogonal zur Rotationsachse des Maschinenreibwerkzeugs (1) verläuft, sich von dem Winkel zwischen der zweiten Führungsfläche (32) und der Referenzebene unterscheidet, insbesondere um mindestens 3° oder mindestens 5°.

3. Maschinenreibwerkzeug (1) gemäss Anspruch 2, wobei
der Winkel zwischen der ersten Führungsfläche (31) bezüglich der Referenzebene 65° beträgt, und der Winkel zwischen der zweiten Führungsfläche (32) und der Referenzebene 70° beträgt.

4. Maschinenreibwerkzeug (1) gemäss einem der Ansprüche 1 bis 3,
• wobei die Kraft, welche die erste Führungsfläche (31) gegen die erste Aufhahmefläche (21) presst, auch eine erste und eine zweite Referenzfläche (33a, 33b) des Schneideinsatzes (3) gegen eine Referenzfläche (23) des Grundkörpers (2) presst,
• wobei insbesondere diese Referenzflächen (23, 33a, 33b) orthogonal zur Rotationsachse des Maschinenreibwerkzeugs (1) liegen.

5. Maschinenreibwerkzeug (1) gemäss Anspruch 3, wobei der Klemmkörper (4) und die zweite Aufnahmefläche (22), in Drehrichtung bei Verwendung des Maschinenreibwerkzeugs (1) gesehen, bezüglich des Schneideinsatzes (3) vorlaufen.

6. Maschinenreibwerkzeug (1) gemäss Anspruch 4 oder 5, mit einer Spannmutter (43), welche mit einem Gewindeabschnitt (42) des Klemmkörpers (4) zusammenwirkend die Kraft ausübt, welche die erste Aufnahmefläche (21) gegen die erste Führungsfläche (31) presst, wobei die Spannmutter (43) einen Konusabschnitt (44) aufweist, und mit diesem Konusabschnitt (44) in einem konischen Sitz (29) des Grundkörpers (2) angeordnet ist.

7. Maschinenreibwerkzeug (1) gemäss einem der vorangehenden Ansprüche, wobei eine Schneidenaufnahme (24) jeweils eine Anschlageinheit aufweist, welche eine einstellbare Begrenzung der Bewegung des in die Schneidenaufnahme (24) eingesetzten Schneideinsatzes (3) in Richtung der Linearführung bewirkt, insbesondere wobei die Anschlageinheit eine in Richtung der Linearführung verstellbare Stellschraube (25) aufweist,
insbesondere wobei die Stellschraube (25) ein Einstellen der Lage des Schneideinsatzes (3) in einem Bereich von bis zu zehn Millimetern, insbesondere bis zu sechs Millimetern ermöglicht.

8. Maschinenreibwerkzeug (1) gemäss einem der vorangehenden Ansprüche, wobei der Grundkörper (2) einen Aussendurchmesser zwischen 120 und 300 Millimetern aufweist.

9. **Schneideinsatz** (3) zur Verwendung in einen Maschinenreibwerkzeug (1) gemäss einem der vorangehenden Ansprüche, aufweisend eine Schneide (36) zum Reiben eines Werkstücks, **dadurch gekennzeichnet, dass** der Schneideinsatz einen Schwalbenschwanzabschnitt (34) zur Linearführung des Schneideinsatzes (3) mittels einer Schwalbenschwanzführung aufweist, wobei der Schwalbenschwanzabschnitt (34) asymmetrisch ausgebildet ist, indem
sich der Schneideinsatz (3) in eine Führungsrichtung erstreckt, und zum Einschieben entlang der Führungsrichtung in eine Schneidenaufnahme (24) vorgesehen ist,
der Schwalbenschwanzabschnitt (34) zwei Referenzflächen (33a, 33b) aufweist, welche an gegenüberliegenden Seiten des Schwalbenschwanzabschnitts (34) angeordnet sind und in einer gemeinsamen Referenzebene liegen,
der Schwalbenschwanzabschnitt (34) eine erste Führungsfläche (31) und eine zweite Führungsfläche (32) aufweist,
die Referenzflächen (33a, 33b), die erste Führungsfläche (31) und die zweite Führungsfläche (32) parallel zu Führungsrichtung verlaufen,
die erste Führungsfläche (31) und eine erste der Referenzflächen (33a), im Bereich ausserhalb des Schneideinsatzes (3), einen ersten Führungswinkel bilden,
die zweite Führungsfläche (32) und eine zweite der Referenzflächen (33b), im Bereich ausserhalb des Schneideinsatzes (3), einen zweiten Führungswinkel bilden,
wobei der erste und der zweite Führungswinkel spitze Winkel sind und sich unterscheiden.

10. Schneideinsatz (3) gemäss Anspruch 9, wobei der erste und der zweite Führungswinkel sich um mindestens 3° oder mindestens 5° unterscheiden.

11. Schneideinsatz (3) gemäss Anspruch 9 oder 10, wobei, bezüglich einer Schneidrichtung der Schneide (36), der vorauslaufende der beiden Führungswinkel der grössere ist.

12. Schneideinsatz (3) gemäss Anspruch 9 oder 10 oder 11, wobei der der erste spitze Winkel 65° beträgt und der zweite spitze Winkel 70° beträgt.

13. **Grundkörper** (2) zur Verwendung in einem Maschinenreibwerkzeug (1) gemäss einem der Ansprüche 1 bis 8, aufweisend Schneidenaufnahmen (24) welche jeweils prismatische Gleitführungen als Linearführungen zur Aufnahme von Schneideinsätzen (3) in eine Richtung orthogonal zu einer Rotationsachse des Maschinenreibwerkzeugs (1) bilden,
**dadurch gekennzeichnet, dass** eine Linearführung jeweils eine prismatische Gleitführung in Form einer Schwalbenschwanzführung ist, zur Aufnahme eines Schneideinsatzes (3) mit einem Schwalbenschwanzabschnitt (34) mit einer ersten Führungsfläche (31) und einer zweiten Führungsfläche (32), welche mit einer ersten Aufnahmefläche (21) und einer zweiten Aufnahmefläche (22) des Grundkörpers (2) zusammenwirkend die Schwalbenschwanzführung definieren, und
wobei der Grundkörper (2) einen Klemmkörper (4) aufweist, welcher, wenn ein Schneideinsatz (3) in die Schneidenaufnahme (24) eingesetzt ist, mit der zweiten Aufhahmefläche (22) zusammenwirkt und dabei eine Kraft ausübt, welche die erste Führungsfläche (31) gegen die erste Aufnahmefläche (21) presst.

14. Grundkörper (2) gemäss Anspruch 15, aufweisend mehrere, jeweils einer Schneidenaufnahme (24) zugeordnete Kühlmittelzuführungen (26), wobei eine Kühlmittelzuführung (26) jeweils durch den Grundkörper (2) zu einer Düsenaufnahme (27) führt, von der Düsenaufnahme (27) aus ein Sprühkanal (28) in Richtung der zugeordneten Schneidenaufnahme (24) führt, und in die Düsenaufnahme (27) ein Düsenkörper (5) eingesetzt ist, der Düsenkörper (5) einen in Umfangsrichtung um den Düsenkörper (5) verlaufenden Einschnitt (51) aufweist, und eine umlaufende Flanke des Einschnitts (51) eine Strahlrichtung eines durch die Kühlmittelzuführung (26) zugeführten Kühlmittelstrahls definiert.

## Claims

1. Machine reaming tool (1), comprising a base body (2) with a plurality of cutting edge receptacles (24) with cutting inserts (3) inserted therein;
wherein the cutting inserts (3) are inserted in cutting edge receptacles (24) which each form a prismatic sliding guide as a linear guide of the cutting inserts (3) in a direction orthogonal to an axis of rotation of the machine reaming tool (1), **characterised in that** the linear guide is a prismatic sliding guide in the form of a dovetail guide, the cutting insert (3) having a dovetail portion (34) with a first guide surface (31) and a second guide surface (32) which cooperate with a first receiving surface (21) and a second receiving surface (22) of the base body (2) to define the dovetail guide, and
wherein the machine reaming tool (1) comprises a clamping body (4) which cooperates with the second receiving surface (22) and thereby exerts a force which presses the first guide surface (31) against the first receiving surface (21).

2. Machine reaming tool (1) according to claim 1, wherein the dovetail guide is formed asymmetrically,
in particular in that an angle between the first guide surface (31) with respect to a reference plane which runs orthogonally to the axis of rotation of the machine reaming tool (1), differs from the angle between the second guide surface (32) and the reference plane, in particular by at least 3° or at least 5°.

3. Machine reaming tool (1) according to claim 2, wherein
the angle between the first guide surface (31) with respect to the reference plane is 65°, and the angle between the second guide surface (32) and the reference plane is 70°.

4. Machine reaming tool (1) according to any one of claims 1 to 3,
- wherein the force pressing the first guide surface (31) against the first receiving surface (21) also presses a first and a second reference surface (33a, 33b) of the cutting insert (3) against a reference surface (23) of the base body (2),
- wherein in particular these reference surfaces (23, 33a, 33b) lie orthogonally to the axis of rotation of the machine reaming tool (1).

5. Machine reaming tool (1) according to claim 3, wherein the clamping body (4) and the second receiving surface (22), considered in the direction of rotation when the machine reaming tool (1) is in use, lead with respect to the cutting insert (3).

6. Machine reaming tool (1) according to claim 4 or 5, comprising a clamping nut (43) which, in cooperation with a threaded portion (42) of the clamping body (4), exerts the force which presses the first receiving surface (21) against the first guide surface (31), the clamping nut (43) having a conical portion (44) and being arranged with this conical portion (44) in a conical seat (29) of the base body (2).

7. Machine reaming tool (1) according to one of the preceding claims, wherein a cutting edge receptacle (24) has in each case a stop unit which effects an adjustable limitation of the movement of the cutting insert (3) inserted into the cutting edge receptacle (24) in the direction of the linear guide,
in particular wherein the stop unit has a adjusting screw (25) which is adjustable in the direction of the linear guide,
in particular wherein the adjusting screw (25) enables the position of the cutting insert (3) to be adjusted in a range of up to ten millimetres, in particular up to six millimetres.

8. Machine reaming tool (1) according to one of the preceding claims, wherein the base body (2) has an outer diameter between 120 and 300 millimetres.

9. Cutting insert (3) for use in a machine reaming tool (1) according to any one of the preceding claims, comprising a cutting edge (36) for reaming a workpiece, **characterised in that** the cutting insert comprises a dovetail portion (34) for linear guidance of the cutting insert (3) by means of a dovetail guide, wherein the dovetail portion (34) is formed asymmetrically, **in that**
the cutting insert (3) extends in a guiding direction, and is provided for insertion along the guiding direction into a cutting edge receptacle (24),
the dovetail portion (34) has two reference surfaces (33a, 33b) arranged on opposite sides of the dovetail portion (34) and lying in a common reference plane, said dovetail portion (34) has a first guide surface (31) and a second guide surface (32),
the reference surfaces (33a, 33b), the first guide surface (31) and the second guide surface (32) are parallel to the direction of guiding
the first guide surface (31) and a first of the reference surfaces (33a), in the region outside the cutting insert (3), form a first guide angle,
the second guide surface (32) and a second of the reference surfaces (33b), in the region outside the cutting insert (3), form a second guide angle,
said first and second guide angles being acute angles and being different.

10. Cutting insert (3) according to claim 9, wherein said first and second guide angles differ by at least 3° or at least 5°.

11. Cutting insert (3) according to claim 9 or 10, wherein, with respect to a cutting direction of the cutting edge (36), the leading one of the two guide angles is the larger one.

12. Cutting insert (3) according to claim 9 or 10 or 11, wherein the first acute angle is 65° and the second acute angle is 70°.

13. Base body (2) for use in a machine reaming tool (1) according to one of claims 1 to 8, comprising cutting edge receptacles (24) which each form prismatic sliding guides as linear guides for receiving cutting inserts (3) in a direction orthogonal to an axis of rotation of the machine reaming tool (1),
**characterised in that** a linear guide is in each case a prismatic sliding guide in the form of a dovetail guide for receiving a cutting insert (3) with a dovetail section (34) with a first guide surface (31) and a second guide surface (32), which define the dovetail guide in cooperation with a first receiving surface (21) and a second receiving surface (22) of the base body (2), and
wherein the base body (2) comprises a clamping body (4) which, when a cutting insert (3) is inserted into the cutting edge receptacle (24), cooperates with the second receiving surface (22) and thereby exerts a force which presses the first guide surface (31) against the first receiving surface (21).

14. Base body (2) according to claim 13, comprising a plurality of coolant feeds (26) each associated with a cutting edge receptacle (24), wherein a coolant feed (26) leads in each case through the base body (2) to a nozzle receptacle (27), a spray channel (28) leads from the nozzle receptacle (27) in the direction of the associated cutting edge receptacle (24), and a nozzle body (5) is inserted into the nozzle receptacle (27), the nozzle body (5) has an incision (51) extending in the circumferential direction around the nozzle body (5), and a circumferential flank of the incision (51) defines a jet direction of a coolant jet supplied through the coolant supply (26).

## Revendications

1. Outil d'alésage (1), présentant un corps de base (2) avec une pluralité de logements de coupe (24) avec des inserts de coupe (3) insérés dans ceux-ci ;
les inserts de coupe (3) étant insérés dans des logements de coupe (24) qui forment respectivement un guidage coulissant prismatique comme guidage linéaire des inserts de coupe (3) dans une direction orthogonale à un axe de rotation de l'outil d'alésage (1),
**caractérisé en ce que** le guidage linéaire est un guidage coulissant prismatique sous la forme d'un guidage en queue d'aronde, l'insert de coupe (3) présentant une section en queue d'aronde (34) avec une première surface de guidage (31) et une deuxième surface de guidage (32) qui définissent le guidage en queue d'aronde en coopérant avec une première surface de réception (21) et une deuxième surface de réception (22) du corps de base (2), et
l'outil d'alésage (1) présentant un corps de serrage (4) qui coopère avec la deuxième surface de réception (22) et exerce ainsi une force qui presse la première surface de guidage (31) contre la première surface de réception (21).

2. Outil d'alésage (1) selon la revendication 1, dans lequel le guidage en queue d'aronde est asymétrique,
notamment en ce qu'un angle entre la première surface de guidage (31) par rapport à un plan de référence, qui est orthogonal à l'axe de rotation de l'outil d'alésage (1), diffère de l'angle entre la deuxième surface de guidage (32) et le plan de référence, notamment d'au moins 3° ou d'au moins 5°.

3. Outil d'alésage (1) selon la revendication 2, dans lequel
l'angle entre la première surface de guidage (31) et le plan de référence est de 65°, et l'angle entre la deuxième surface de guidage (32) et le plan de référence est de 70°.

4. Outil d'alésage (1) selon l'une quelconque des revendications 1 à 3,
- dans lequel la force qui presse la première surface de guidage (31) contre la première surface de réception (21) presse également une première et une deuxième surfaces de référence (33a, 33b) de l'insert de coupe (3) contre une surface de référence (23) du corps de base (2),
- ces surfaces de référence (23, 33a, 33b) étant notamment orthogonales à l'axe de rotation de l'outil d'alésage (1).

5. Outil d'alésage (1) selon la revendication 3, dans lequel le corps de serrage (4) et la deuxième surface de réception (22), vus dans le sens de rotation lors de l'utilisation de l'outil d'alésage (1), avancent par rapport à l'insert de coupe (3).

6. Outil d'alésage (1) selon la revendication 4 ou 5, avec un écrou de serrage (43) qui, en coopérant avec une section filetée (42) du corps de serrage (4), exerce la force qui presse la première surface de réception (21) contre la première surface de guidage (31), l'écrou de serrage (43) présentant une section conique (44) et étant disposé avec cette section conique (44) dans un siège conique (29) du corps de base (2).

7. Outil d'alésage (1) selon l'une des revendications précédentes, dans lequel un logement de lame (24) présente respectivement une unité de butée qui provoque une limitation réglable du mouvement de l'insert de coupe (3) inséré dans le logement de lame (24) en direction du guidage linéaire,
en particulier, l'unité de butée présentant une vis de réglage (25) réglable en direction du guidage linéaire,
en particulier, la vis de réglage (25) permettant un réglage de la position de l'insert de coupe (3) dans une plage allant jusqu'à dix millimètres, en particulier jusqu'à six millimètres.

8. Outil d'alésage (1) selon l'une des revendications précédentes, dans lequel le corps de base (2) présente un diamètre extérieur compris entre 120 et 300 millimètres.

9. Plaquette de coupe (3) destiné à être utilisé dans un outil d'alésage (1) selon l'une des revendications précédentes, présentant un tranchant (36) pour l'alésage d'une pièce à usiner, **caractérisé en ce que** l'insert de coupe présente une section en queue d'aronde (34) pour le guidage linéaire de l'insert de coupe (3) au moyen d'un guidage en queue d'aronde, la section en queue d'aronde (34) étant réalisée de manière asymétrique, **en ce que**
l'insert de coupe (3) s'étend dans une direction de guidage, et est prévu pour être inséré le long de la direction de guidage dans un logement de couteau (24),
la section en queue d'aronde (34) présente deux surfaces de référence (33a, 33b) qui sont disposées sur des côtés opposés de la section en queue d'aronde (34) et se trouvent dans un plan de référence commun,
la section en queue d'aronde (34) présente une première surface de guidage (31) et une deuxième surface de guidage (32),
les surfaces de référence (33a, 33b), la première surface de guidage (31) et la deuxième surface de guidage (32) sont parallèles à la direction de guidage,
la première surface de guidage (31) et une première des surfaces de référence (33a) forment un premier angle de guidage dans la zone située à l'extérieur de la plaquette de coupe (3),
la deuxième surface de guidage (32) et une deuxième des surfaces de référence (33b), dans la zone à l'extérieur de la plaquette de coupe (3), forment un deuxième angle de guidage,
le premier et le deuxième angle de guidage étant des angles aigus et étant différents.

10. Plaquette de coupe (3) selon la revendication 9, dans laquelle le premier et le deuxième angle de guidage diffèrent d'au moins 3° ou d'au moins 5°.

11. Plaquette de coupe (3) selon la revendication 9 ou 10, dans laquelle, par rapport à une direction de coupe du tranchant (36), l'angle de guidage le plus avancé des deux est le plus grand.

12. Plaquette de coupe (3) selon la revendication 9 ou 10 ou 11, dans laquelle le premier angle aigu est de 65° et le deuxième angle aigu est de 70°.

13. Corps de base (2) destiné à être utilisé dans un outil d'alésage (1) selon l'une des revendications 1 à 8, présentant des logements de coupe (24) qui forment respectivement des guides coulissants prismatiques en tant que guides linéaires pour recevoir des inserts de coupe (3) dans une direction orthogonale à un axe de rotation de l'outil d'alésage (1),
**caractérisé en ce qu'**un guide linéaire est respectivement un guide coulissant prismatique sous la forme d'un guide en queue d'aronde, pour recevoir une plaquette de coupe (3) avec une section en queue d'aronde (34) avec une première surface de guidage (31) et une deuxième surface de guidage (32), qui définissent le guide en queue d'aronde en coopérant avec une première surface de réception (21) et une deuxième surface de réception (22) du corps de base (2), et
le corps de base (2) présentant un corps de serrage (4) qui, lorsqu'une plaquette de coupe (3) est insérée dans le logement de lame (24), coopère avec la deuxième surface de réception (22) et exerce alors une force qui presse la première surface de guidage (31) contre la première surface de réception (21).

14. Corps de base (2) selon la revendication 13, présentant plusieurs amenées de fluide de refroidissement (26) associées chacune à un logement de lame (24), une amenée de fluide de refroidissement (26) menant respectivement à travers le corps de base (2) à un logement de buse (27), un canal de pulvérisation (28) menant du logement de buse (27) en direction du logement de lame (24) associé, et un corps de buse (5) est inséré dans le logement de buse (27), le corps de buse (5) présente une entaille (51) s'étendant dans la direction périphérique autour du corps de buse (5), et un flanc périphérique de l'entaille (51) définit une direction de jet d'un jet de réfrigérant amené par l'alimentation en réfrigérant (26).
